# EUROPEAN PATENT SPECIFICATION

(11) **EP 1 916 826 B1**
(45) Date of publication and mention of the grant of the patent: **14.10.2009**
(21) Application number: 06022320.3
(22) Date of filing: 25.10.2006
(51) Int. Cl.: H04M 1/02

(54) **Electronic devices with sliding and tilting mechanisms**
Elektronische Vorrichtungen mit verschiebbaren und schwenkbaren Mechanismen
Dispositifs électroniques équipés de méchanismes coulissants et pivotants

(43) Date of publication of application: 30.04.2008
(73) Proprietor: HTC Corporation, Taoyuan County 330 (TW)
(72) Inventor: Ou, Chung-Yuan, Taoyuan (TW)
(74) Representative: Schaeberle, Steffen

(56) References cited:
- EP-A- 1 312 999
- EP-A1- 1 439 685
- EP-A2- 1 422 911
- US-A1- 2005 044 665
- US-A1- 2006 073 859

## Description

### TECHNICAL FIELD

The present disclosure relates to electronic devices having slide and tilt mechanisms. In particular, aspects of the present disclosure relate to mobile communication and/or computing devices having slide and tilt mechanisms.

### BACKGROUND

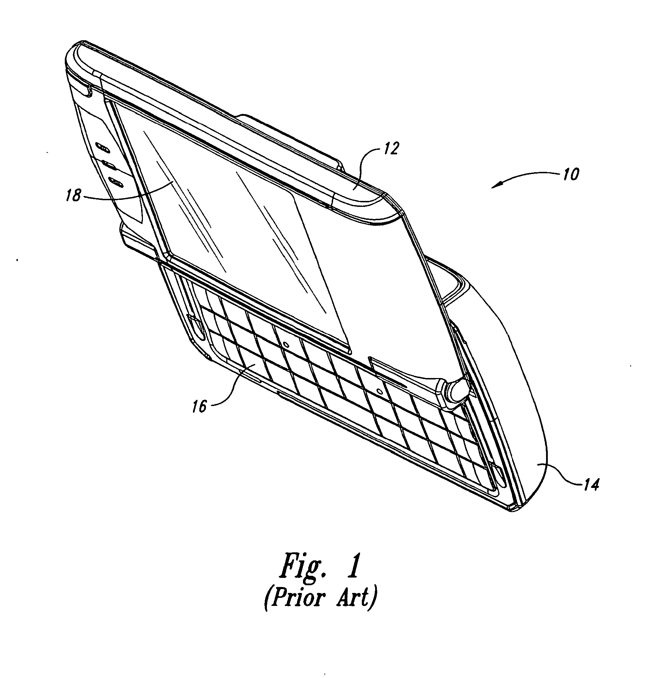

Current mobile communication/computing devices typically include a display and a keyboard that can either pivot or slide relative to each other. For example, the display can pivot relative to the keyboard in a flip phone, or can slide relative to the keyboard in a personal digital assistant (PDA) or a smart phone. Figure 1 illustrates a representative mobile communication/computing device 10 that includes a display 12 carrying a screen 18. The display 12 is attached to a base 14 that carries a keyboard 16. The display 12 can slide relative to the base 14 to expose the keyboard 16.
The US 2005/0044665 A1 discloses a slide hinge for a small-sized information terminal in which a first casing provided with a keyboard portion in the second casing provided with a display portion are relatively slid. The information terminal includes a first casing, fixing members, a second casing, a guide member and a turning member. When the second casing is linearly pushed forward from the state in which the first casing and the second casing completely overlap each other, the first guide pins of the slide means and the second guide pins of the turning means slide inside the guide grooves provided in the guide member such that the second casing slides with respect to the first casing until the first guide pins put against terminal portions of the guide grooves.
EP 1 312 999 A2 discloses a text keyboard for use with an electronic device wherein the keyboard is mounted on a surface on the body of the device. A panel slides over said recessed surface and the panel is constructed with a display screen for observation of the user.

Current mobile communication/computing devices have several drawbacks. For example, one drawback associated with the mobile communication/computing device 10 is that the viewing angle of the screen 18 cannot be adjusted with respect to the keyboard 16. As a result, the user has to look up to read the screen 18 and look down to see the keyboard 16. Such repetitive motion can put a strain on the user's neck and discourage the user from using the mobile device 10. Accordingly, there is a need for a mobile communication/computing device that allows the user to adjust the viewing angle of the screen relative to the keyboard while providing for an overall compact arrangement.

### BRIEF DESCRIPTION OF THE DRAWINGS

Figure 1 is a perspective view of a mobile communication/computing device configured in accordance with the prior art.

Figures 2A-2C are perspective views of an electronic device in a closed configuration, a slide-out configuration, and a tilted configuration, respectively, configured in accordance with an embodiment of the invention.

Figure 2D is an enlarged and partially cut-away perspective view of a portion of the electronic device of Figure 2C.

Figure 3 is a partially exploded bottom view of a first electronic component of the electronic device of Figures 2A-2C configured in accordance with an embodiment of the invention.

Figure 4 is a perspective view of a hinge of the electronic device of Figures 2A-2C configured in accordance with an embodiment of the invention.

Figures 5A-5B are bottom views of the sliding members of the electronic device of Figures 2A-2C in a first position and a second position, respectively, and configured in accordance with an embodiment of the invention.

Figure 5C is an end view of the sliding members of Figures 5A-5B configured in accordance with an embodiment of the invention.

Figure 6 is a top view of a second electronic component of the electronic device of Figures 2A-2C that includes a guide member configured in accordance with an embodiment of the invention.

Figure 7 is a cross-sectional view of the guide member of Figure 6 assembled with the sliding members of Figures 5A-5B in accordance with an embodiment of the invention.

Figure 8 is a perspective view of an electronic device having guide members and hinges configured in accordance with another embodiment of the invention.

Figure 9 is a perspective view of the hinge shown in Figure 8 and configured in accordance with an embodiment of the invention.

Figure 10 is a perspective view of the guide member shown in Figure 8, and configured in accordance with an embodiment of the invention.

Figures 11A-11B are bottom views of an electronic device having slide assisting springs and configured in accordance with another embodiment of the invention.

Figures 12A-12B are bottom views of an electronic device having slide assisting magnets and configured in accordance with another embodiment of the invention.

Figures 12C-12D are schematic cross-sectional views of the electronic device of Figures 12A-12B configured in accordance with an embodiment of the invention.

### DETAILED DESCRIPTION

### A. Overview

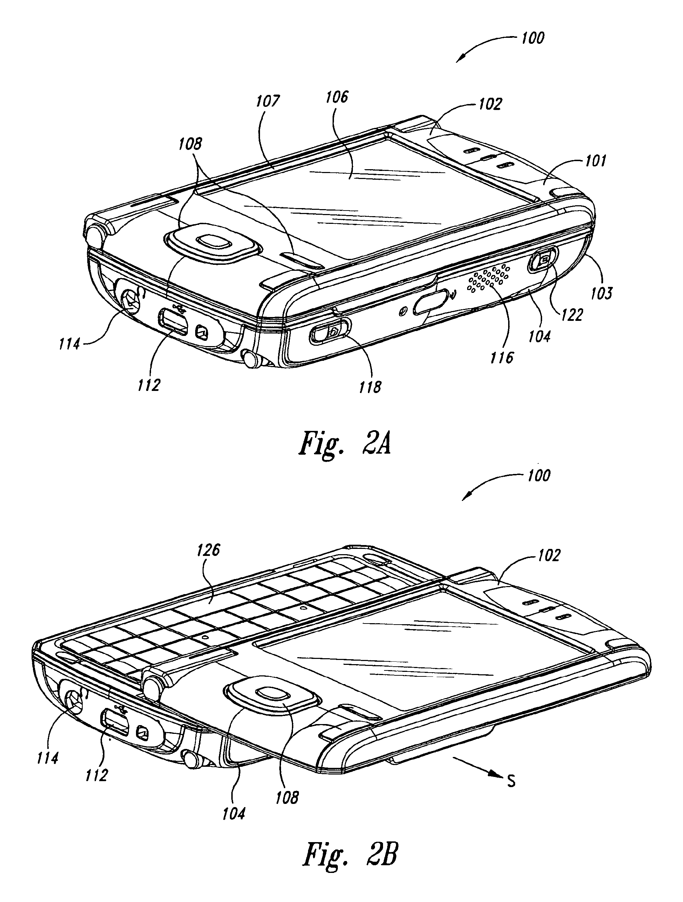

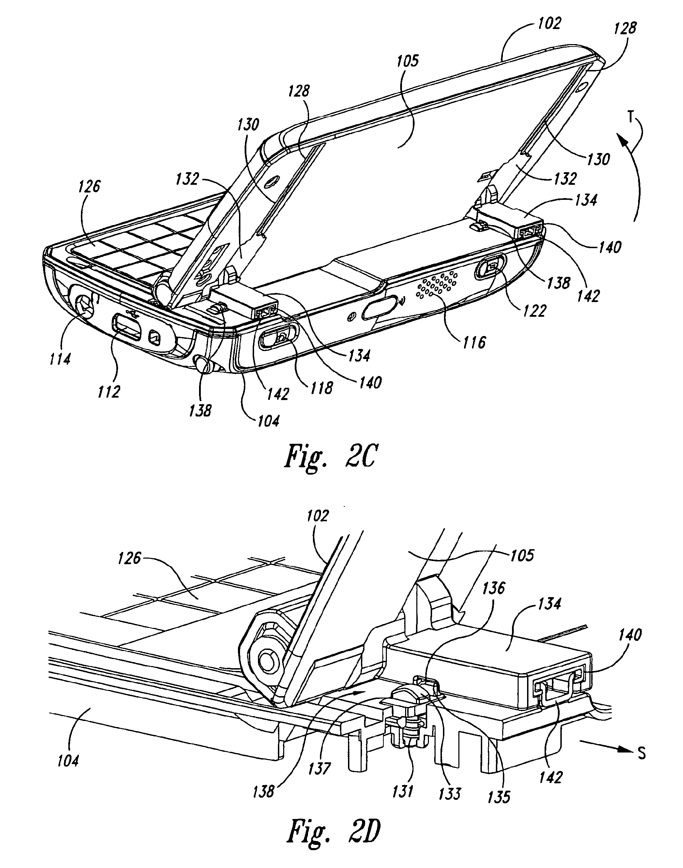

The present disclosure describes sliding and tilting mechanisms for electronic devices. It will be appreciated that several of the details set forth below are provided to describe the following embodiments in a manner sufficient to enable a person skilled in the relevant art to make and use the disclosed embodiments. Several of the details and advantages described below, however, may not be necessary to practice certain embodiments of the invention. Additionally, the invention can include other embodiments that are within the scope of the claims but are not described in detail with respect to Figures 2-12.

One aspect of certain of the disclosed embodiments is directed toward a mobile communication device having a sliding and tilting mechanism. The mobile communication device can include a first electronic component (e.g., a display) having a first sliding member, a second electronic component (e.g., a keyboard) having a guide member, and a hinge coupling the first and second electronic components. The hinge can carry a second sliding member. The first and second sliding members are positioned to engage with the guide member, with at least one of the first and second electronic components slidable relative to each other when the first and second sliding members are axially aligned with each other. At least one of the first and second electronic components is pivotable relative to the other when the guide member is engaged with the second sliding member and disengaged from the first sliding member.

The present invention is defined in the attached independent claim to which reference should now be made. Further, preferred features may be found in the dependent claims appended thereto.

### B. Electronic Devices With Sliding and Tilting Mechanisms

Figure 2A is a perspective view of an electronic device 100 in a closed configuration and configured in accordance with an embodiment of the invention. The electronic device 100 can include a first electronic component 102 and a second electronic component 104 movably engaged with the first electronic component 102. The first and second electronic components 102, 104 can slide and tilt relative to each other to provide a desired viewing angle to a user. In the illustrated position, the second electronic component 104 is generally juxtaposed face-to-face with the first electronic component 102. In other positions, such as those shown in Figures 2B-2D, the first and second electronic components 102, 104 can be offset from each other, and/or tilted relative to each other.

The first electronic component 102 can include a first housing 101 and various electronic and/or mechanical components carried by or attached to the first housing 101. For example, the first electronic component 102 can include a display 106 (e.g., a liquid crystal display), a face plate 107, input buttons 108, and/or other types of electronic subcomponents. The first housing 101 can include a structure suitably sized and shaped to carry these electronic and/or mechanical subcomponents.

The second electronic component 104 can include a second housing 103 that carries input/output components and is constructed generally similarly to the first housing 101. The second electronic component 104 can include input components, such as a camera button 118 and a voice recorder button 122, to accept inputs from a user. The second electronic component 104 can also include a communication port 112 for connecting to an external device (e.g., a personal computer, not shown). The communication port 112 can be, for example, a Universal Serial Bus port or other suitable communication port. The second electronic component 104 can further include various output components, such as a headphone port 114 and a speaker 116, to provide feedback to the user. The electronic device 100 can further include other computing components, such as those generally found in PDA devices, cellular phones, laptop computers, tablet PCs, smart phones, hand-help email devices, or other mobile communication/computing devices. In one embodiment, the electronic device 100 can be an e-mail device or used for transmitting/receiving e-mail.

In one mode of operation, the user can operate the electronic device 100 in the closed position using the input buttons 108 on the first electronic component 102 and/or the buttons 118, and 122 on the second electronic component 104. The user can obtain feedback from the electronic device 100 via the display 106, the headphone port 114, the speaker 116, or a combination of these subcomponents. In other modes of operation, the electronic device can be operated in any of several open positions, as is described further below.

Figure 2B is a perspective view of the electronic device 100 of Figure 2A in a slide-out configuration. The first electronic component 102 can slide in a sliding direction S relative to the second electronic component 104 and retract in the reverse direction. In the slide-out position, the first electronic component 102 can be offset from the second electronic component 104 to expose an input device 126 of the second electronic component 104. The first electronic component 102 can also retract to the closed position shown in Figure 2A to hide the input device 126. In the illustrated embodiment, the input device 126 includes a keyboard (e.g., a QWERTY keyboard, a QWERTZ keyboard, an AZERTY keyboard, and a DVORAK keyboard). In other embodiments, the input device 126 can include a touch pad, a handwriting tablet, or other suitable input components. The keyboard-type input device 126 is particularly useful because it is easy and efficient to type message into the electronic device 100. The second electronic component 104 can also include additional electronic and/or mechanical subcomponents (e.g., push buttons and/or a magnetic card reader) positioned proximate to the input device 126.

Figure 2C is a perspective view of the electronic device 100 of Figure 2A in a tilted configuration. The first electronic component 102 can pivot in a tilting direction T relative to the second electronic component 104 when the first electronic component 102 is offset from the second electronic component 104. Accordingly, the major plane of the first electronic component 102 can form a non-zero angle relative to the major plane of the second electronic component 104. For example, the first and second electronic components are pivotable relative to each other to form an angle that is greater than 0° and less than 180°.

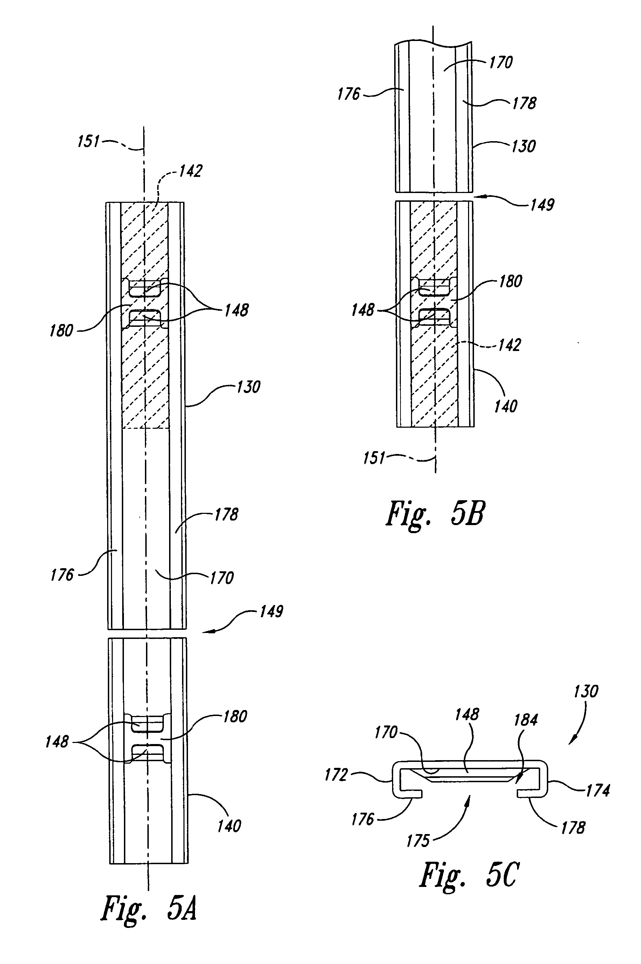

Figure 2C also illustrates features of a representative mechanism that facilitates the foregoing sliding and tilting action. For example, the first electronic component 102 can include first channels 128 and first sliding members 130 received in the first channels 128 on or near a surface 105 of the first electronic component 102. The first sliding members 130 can extend generally the entire length of the first channels 128 and can be fixedly fastened to the first electronic component 102 in the first channels 128 using bolts, rivets, clips, pins, adhesives, or other fasteners. In the illustrated embodiment, the first sliding members 130 include rails having a generally U-shaped cross section, as described in more detail below with reference to Figures 5A-5B. In other embodiments, the first sliding members 130 can include bars, shafts, rods, or other types of sliding structures.

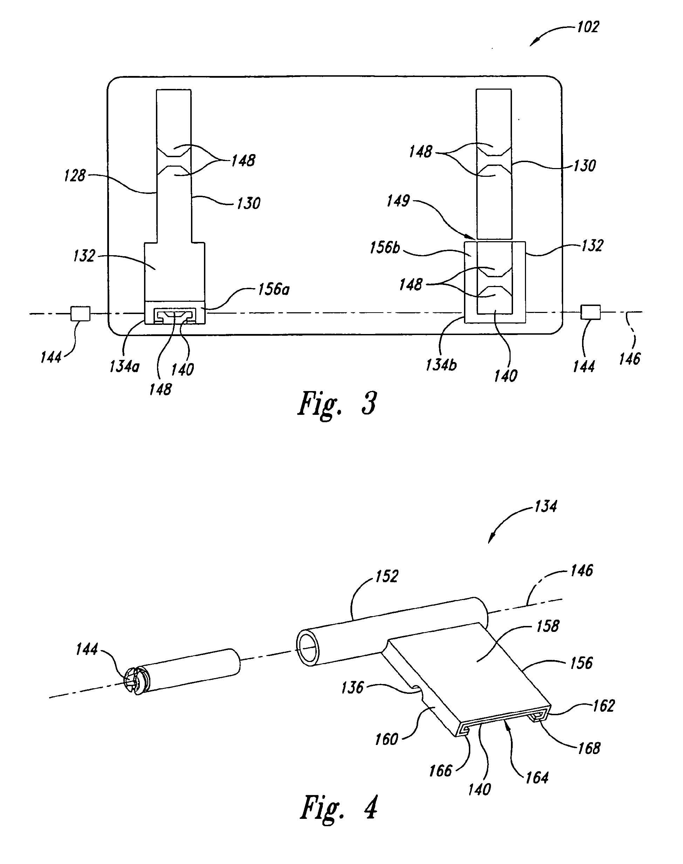

The electronic device 100 can include hinges 134 and second channels 132 on or near the surface 105 of the first electronic component 102. The second channels 132 can be positioned adjacent to the first channels 128 and sized and shaped to receive a corresponding one of the hinges 134. The hinges 134 can slidably and pivotably connect the first and second electronic components 102, 104 so that the first and second electronic components 102, 104 are both slidable and pivotable relative to each other. Embodiments of the hinges 134 are described further below with reference to Figure 4.

The electronic device 100 can further include second sliding members 140 at least partially housed in each of the hinges 134. The second sliding members 140 can be shaped generally similarly to the first sliding members 130. In some embodiments, the second sliding members 140 can be longer than the first sliding members 130. In other embodiments, the second sliding members 140 can be shorter than or equal in length to the first sliding members 130.

The electronic device 100 can further include elastic locks 138 carried by the second electronic component 104. The elastic locks 138 can be positioned proximate to individual hinges 134 for releasably engaging the hinges 134. Once the elastic locks 138 engage the hinges 134, the elastic locks 138 can prevent the first and second electronic components from sliding relative to each other in the sliding direction S, as described in more detail below with reference to Figure 2D.

Figure 2D is an enlarged and partially cut-away perspective view of a portion of the electronic device 100 shown in Figure 2C. As illustrated in Figure 2D, the second electronic component 104 can include a guide member 142 for guiding the first and second sliding members 130, 140 (Figure 2C). The guide member 142 can be fixedly attached to the second electronic component 104, and can sequentially engage the first and second sliding members 130, 140. For example, when the first electronic component 102 and the second electronic component 104 are in the illustrated position relative to each other, the second sliding member 140 generally houses the guide member 142, and the first electronic component is able to tilt relative to the second electronic component 104. When the first and second electronic components 102, 104 have other positions relative to each other (e.g., when they face directly toward each other), the guide member 142 can move out of the second sliding member 140 and engage the first sliding member 130 (Figure 2C) to facilitate the sliding motion of the first electronic component 102.

The relative sliding motion of the first electronic component 102 can be selectively stopped by the elastic locks 138, one of which is shown in Figure 2D. The elastic lock 138 can include a plate 137, a first protrusion 133, and a second protrusion 135, both carried by the plate 137. The plate 137 can allow the first and second protrusions 133, 135 to move together. The elastic lock 138 can further include a coil spring 131 disposed in a recess of the second electronic component 104. The coil spring 131 can force the plate 137 away from the second electronic component 104. The second protrusion 135 can be sized and shaped to fit in a notch 136 of the hinges 134.

When the first and second electronic components 102, 104 are generally juxtaposed face-to-face toward each other (as shown in Figures 2A-2B), the generally flat surface 105 of the first electronic component 102 depresses the first protrusion 133 downwardly to disengage the second protrusion 135 downwardly out of the notch 136. The hinge 134 and/or the guide member 142 are then free to slide relative to each other in the sliding direction S. When the notch 136 of the hinge 134 is again aligned with the second protrusion 135, and the first electronic component 102 is tilted upwardly, the depressing force on the elastic lock 138 is removed. The coil spring 131 can then force the second protrusion 135 into the notch 136 to prevent the hinge 134 and the guide member 142 from sliding any farther relative to each other.

The overall operation of the electronic device 100 is now described with reference to Figures 2A-2D. To open the electronic device 100, the user can slide the first electronic component 102 relative to the second electronic component 104, as shown by arrow S in Figure 2B. The user can then tilt the first electronic component 102 as indicated by arrow T in Figure 2C. The hinges 134 allow the first electronic component 102 to pivot relative to the second electronic component 104 because the first sliding members 130 are free from the second sliding members 140. A user can thus adjust a viewing angle of the display 106 (Figure 2A) relative to the input device 126 by pivoting at least one of the first and second electronic components relative to the other. Because several of the components are visible in Figures 2C and 2D but not Figure 2B, further aspects of both the sliding and tilting operations are now described with reference to Figures 2C and 2D. These aspects are discussed in the context of folding and closing the electronic device 100, which is shown in the unfolded and opened position in Figures 2C and 2D. Accordingly, the following steps are simply reversed to open and unfold the electronic device 100.

The sliding operation is described below in the context of sliding the first component 102 relative to the second component 104. It will be understood that the same general characteristics of the motion apply as well when moving the second component 104 relative to the first component 102. Before the sliding operation, the user folds the first electronic component 102 downwardly so that the first and second sliding members 130, 140 are axially aligned and form a discontinuous path. The hinge 134 is received in the second channel 132 of the first component 102. At this point, the guide member 142 (Figure 2D) is engaged with the second sliding member 140. At the beginning of the sliding operation, as first electronic component 102 slides relative to the second electronic component 104, in the direction opposite that shown by arrow S, the second sliding member 140 slides relative to the guide member 142. As the sliding continues, the guide member 142 disengages from the second sliding members 140 and engages the first sliding member 130. The guide member 142 remains engaged with the first sliding member 130 throughout the closing process. When the guide member 142 is engaged with the first sliding member 130, the first and second electronic components 102, 104 are at least restricted (e.g., prevented) from pivoting relative to each other.

One expected advantage of several embodiments of the electronic device 100 shown in Figures 2A-D is that the user can move the display 106 to any of a wide variety of viewing angles. Accordingly, the user can more easily see both the display 106 and the input device 126 simultaneously, without having to look up to read the display 106, and then look down to see the input device 126, as in conventional devices. As a result, the user can operate the electronic device 100 while in a more comfortable posture.

Another expected advantage of several embodiments of the electronic device 100 shown in Figures 2A-D is that the user can operate the device in different manners depending on the configuration the user places the device in. For example, when the user places the device in the closed configuration as shown in Figure 2A, the user can operate the device using buttons 108 (Figure 2A) and obtain feedback from the display 106 (Figure 2A). When the user places the device in the slide-out configuration as shown in Figure 2B, the user can operate the device using the keyboard 126 (Figures 2B-2D). When the user places the device in the tilted configuration as shown in Figure 2C-2D, the user can operate the device using the keyboard 126 (Figures 2B-2D) and can move the display 106 (Figure 2A) to obtain a desired viewing angle.

Figures 3-7 illustrate further details of various components of the electronic device 100 shown in Figures 2A-2D. For example, Figure 3 is a partially exploded bottom view of the first electronic component 102 of the electronic device 100, with the second electronic component 104 detached for clarity. The hinges 134 (illustrated individually as a first hinge 134a and a second hinge 134b) can be disposed in and rotatably attached to the first housing 101 with first hinge portions 144. Individual hinges 134 can also include housing portions 156a-b that can rotate relative to the first electronic component 102 about a rotation axis 146. In Figure 3, the housing portion 156a of the first hinge 134a is rotated so as to extend in a direction generally perpendicular to the first electronic component 102, and the housing portion 156b of the second hinge 134b is shown rotated into the plane of the first electronic component 102 so as to be received in the second channel 132. In actual operation, the housing portions 156a-b rotate together. The first and second sliding members 130, 140 can further include clip devices 148 configured to receive and releasably engage the guide members 142 (Figure 2D), as described in more detail below with reference to Figures 5-7.

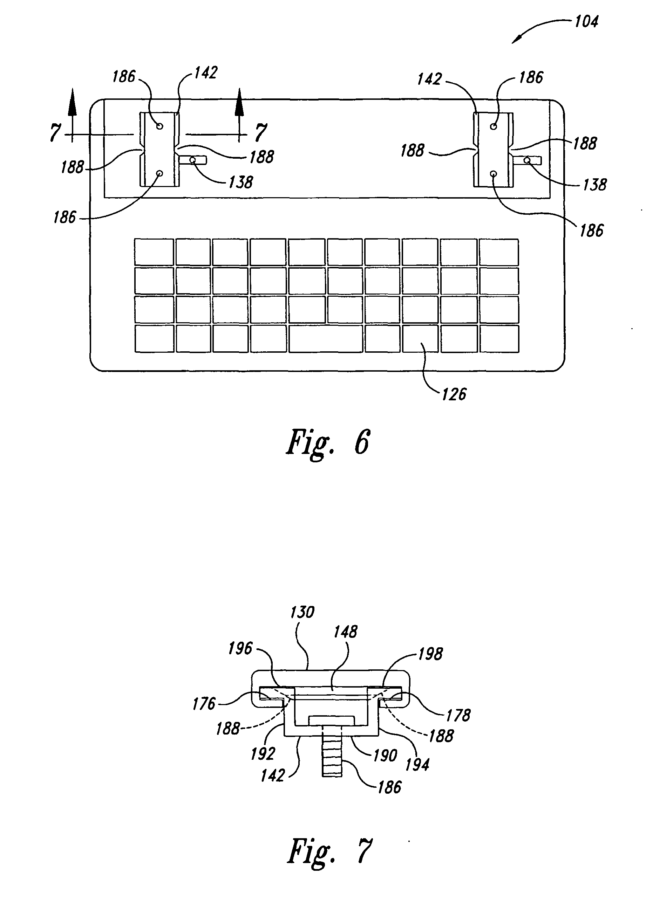

When the housings 156a-b are rotated into the plane of Figure 3 and are received in the corresponding second channels 132, each first sliding member 130 is generally axially aligned with its corresponding second sliding member 140. However, each first sliding member 130 is separated from its corresponding second sliding member 140 by a discontinuity 149. The discontinuity 149 can include a slit or other type of disconnection. The discontinuity 149 allows the second sliding members 140 to be rotated relative to the first sliding members 130 when tilting the first electronic component 102 relative to the second electronic component 104 (Figure 2C). When the first and second sliding members 130, 140 are co-axial, they form a discontinuous path that allows the guide members 142 (shown in Figure 6) to slide along the path.

Figure 4 is a perspective view of one of the hinges 134 of the electronic device 100. The hinge 134 can include the first hinge portion 144, a second hinge portion 152 configured to receive the first hinge portion 144, and the housing portion 156 extending from the second hinge portion 152. The first hinge portion 144 can include different types of pivoting components. For example, the first hinge portion 144 can include a free-stop hinge (Model No. FP001-50F05-100) manufactured by Simula Technology Inc. of Taiwan, or another type of pivoting component. The second hinge portion 152 can be shaped and sized to house the first hinge portion 144.

The housing portion 156 can be fixedly attached to the second hinge portion 152 so as to extend in a direction away from the rotation axis 146. The housing portion 156 can be shaped and sized to receive the second sliding member 140. The housing portion 156 can have a generally rectangular shape with a first wall 158, second walls 160, 162 attached to the first wall 158, and third walls 166, 168 attached to each of the second walls 160, 162. The third walls 166, 168 form a pair of inward lips facing each other across a slot 164. In other embodiments, the housing portion 156 can have other shapes including, for example, a U shape, or an L shape.

Figures 5A-5B are bottom views of the first and second sliding members 130, 140 in a first position and a second position, respectively. In Figures 5A-5B, the first and second sliding members 130, 140 are shown engaged with the guide member 142 (shown in phantom lines). For purposes of illustration, other associated components are not shown in Figures 5A-5B. As shown in Figures 5A-5B, the first and second sliding members 130, 140 can be generally aligned with each other along a sliding axis 151, forming a sliding path that includes the discontinuity 149. When the first and second sliding members 130, 140 are in the first position as shown in Figure 5A, the first sliding member 130 houses the guide member 142. At least one of the first sliding member 130 and the guide member 142 can slide relative to the other along the sliding path. As the first sliding member 130 and the guide member 142 slide relative to each other along the sliding axis 151, the guide member 142 can cross over the discontinuity 149 to engage the second sliding member 140. At least one of the second sliding member 140 and the guide member 142 can then slide relative to the other along the sliding axis 151 so that the second sliding member 140 generally houses the guide member 142. When the first and second sliding members 130, 140 are in the second position as shown in Figure 5B, the guide member 142 is disengaged from the first sliding member 130. The first sliding member 130 can then pivot relative to the guide member 142, allowing the device 100 (Figure 2C) to achieve a position shown in Figure 2C.

Figure 5C is an end view of the first sliding member 130 shown in an upright position. The second sliding member 140 has a generally similar configuration. The first sliding member 130 can include a first wall 170, second walls 172, 174 attached to the first wall 170, and third walls 176, 178 attached to each of the second walls 172, 174. A slot 175 separates opposing pairs of the third walls 176, 178, which extend toward each other. An optional clip device 148 is positioned in the slot 175, and can extend into a space 184 formed by the first wall 170, second walls 172, 174, and the third walls 176, 178. Referring now to Figure 5A, opposing pairs of clip devices 148 can be positioned in both the first sliding member 130 and the second sliding member 140, and can be separated by gaps 180. In certain embodiments, the clip device 148 can be omitted, or the first and second sliding members 130, 140 can incorporate other types of elastic locks. The operation of the clip devices 148 is further described below with reference to Figures 6-7.

Figure 6 is a top view of the second electronic component 104 of the electronic device 100, with the first electronic component 102 detached for clarity. The guide members 142 can be fixedly attached to the second electronic component 104 with fasteners 186. The fasteners 186 can include bolts, rivets, clips, pins, or other types of fasteners. The guide members 142 can optionally include notches 188 configured to engage the clip devices 148 as described in more detail below with reference to Figure 7.

Figure 7 is a cross-sectional view of the guide member 142 engaged with the clip device 148 of the first sliding member 130 for relative sliding motion. It will be understood that the guide member 142 can slide along the second sliding member 140 in a similar manner. The guide member 142 can have a generally rectangular cross section formed by a first wall 190, second walls 192, 194, and third walls 196, 198 attached to each of the second walls 192, 194. The third walls 196, 198 extend opposite of each other. After assembly, the third walls 196, 198 of the guide member 142 can rest on the third walls 176, 178 of the first sliding member 130 and can slide relative to the first sliding member 130.

Referring now to Figures 6 and 7 together, the clip device 148 can releasably engage the guide member 142 to resist relative sliding motion between the guide member 142 and the first sliding member 130. In particular, when the notches 188 of the guide member 142 are generally aligned with the clip device 148 of the first sliding member 130, the clip device 148 can extend into the notches 188 to releasably engage the guide members 142. A user can disengage the notches 188 from the clip device 148 by forcing the first and second electronic components 102, 104 (Figures 2B) to slide relative to each other.

### C. Additional Embodiments of Electronic Devices

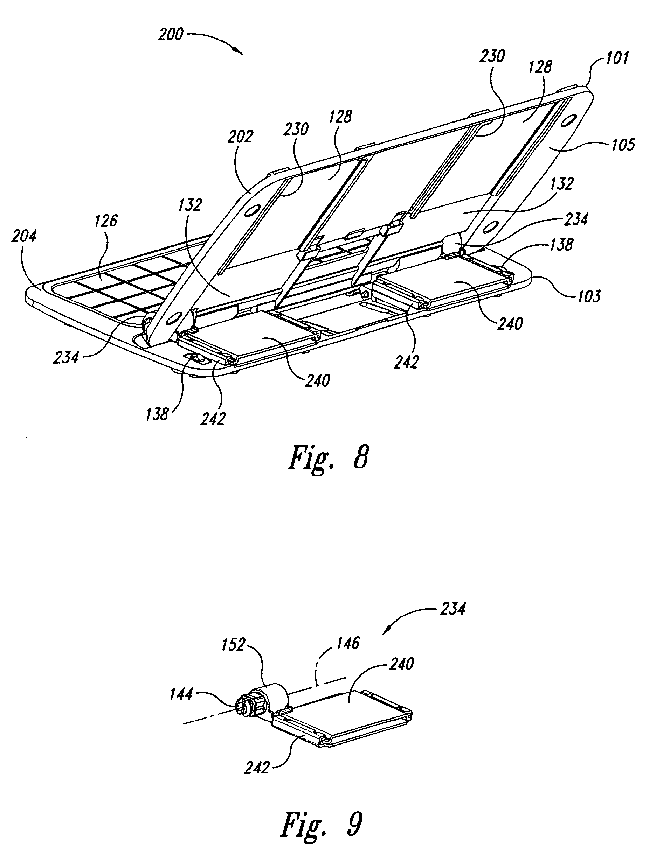

Figures 8-12 illustrate additional embodiments of the electronic device 100 shown in Figures 2A-2D. Figure 8 is a perspective view of an electronic device 200 shown in a tilted position and configured in accordance with another embodiment of the invention. In this embodiment, several components of the electronic device 200 shown in Figure 8 are at least generally similar to the corresponding components of the electronic device 100 described above. Accordingly, selected differences in the operation and structure of the electronic device 200 shown in Figure 8 are described below. Like reference symbols generally refer to like features and components in Figures 2-7.

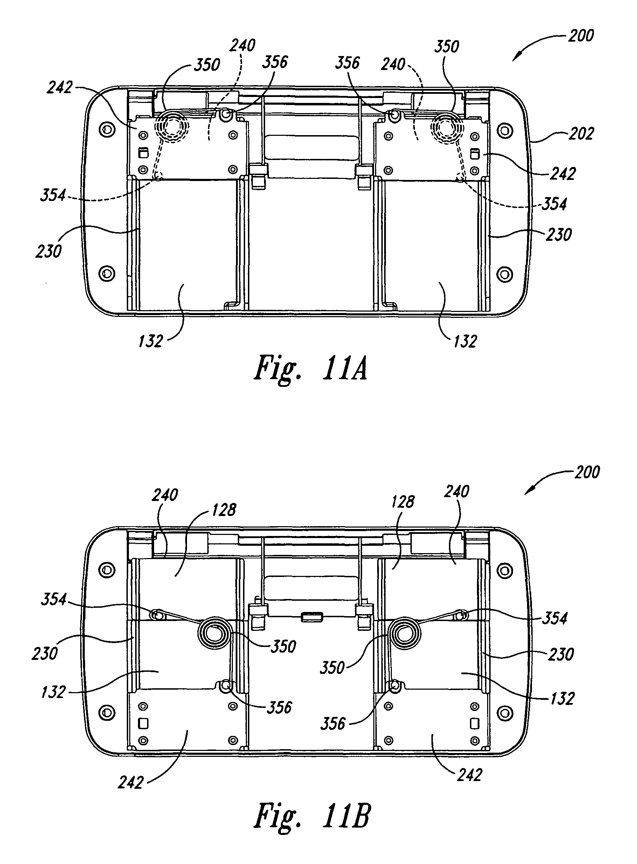

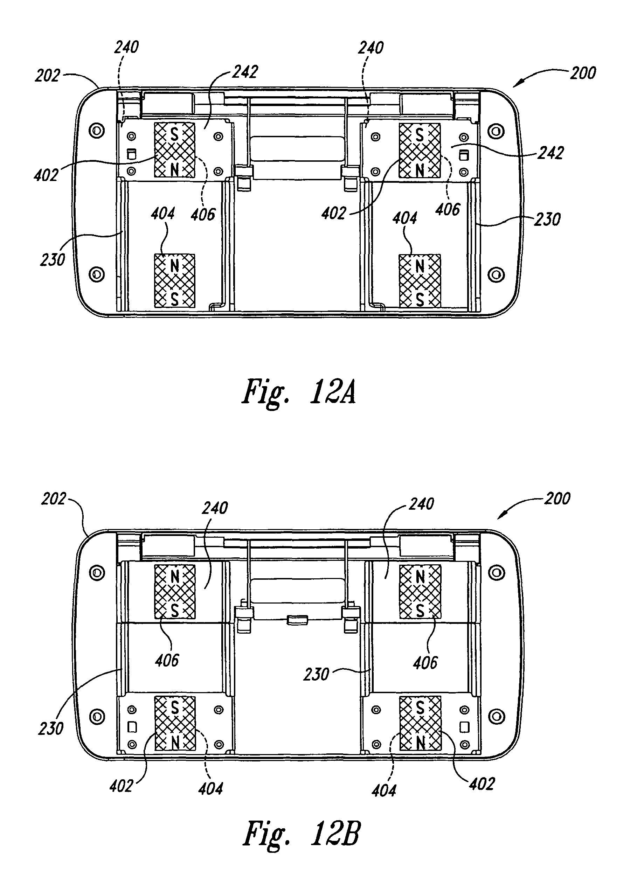

The electronic device 200 can include a first electronic component 202, a second electronic component 204, and hinges 234 movably connecting the first and second electronic components 202, 204. Portions of the second electronic component 204 have been removed for purposes of illustration. The first electronic component 202 can include first sliding members 230 disposed on the first housing 101. The hinges 234 can include second sliding members 240. The second electronic component 204 can include guide members 242 that sequentially engage the first and second sliding members 230, 240. In the illustrated embodiment, the housing portion of the hinges 234 is eliminated and the hinges 234 can integrally incorporate the second sliding members 240 as described in more detail below with reference to Figure 9. The hinges 234 can operate in a generally similar way as the hinges 134 shown in Figure 4. The electronic device 200 can further include urging devices as described in more detail below with reference to Figures 11A-11B and Figures 12A-12D.

Figure 9 is a perspective view of one of the hinges 234 shown engaged with the guide member 242. In particular, the hinge 234 carries the second sliding member 240, which is in turn engaged with the corresponding guide member 242. The second sliding member 240 can extend from the second hinge portion 152 in an outward direction from the axis 146. The second sliding member 240 can be fixedly attached to the second hinge portion 152 via a weldment, molding, mechanical fastening, or other suitable device. The second sliding member 240 can be molded into the second hinge portion 152 offset from the axis 146, or generally coplanar with the axis 146.

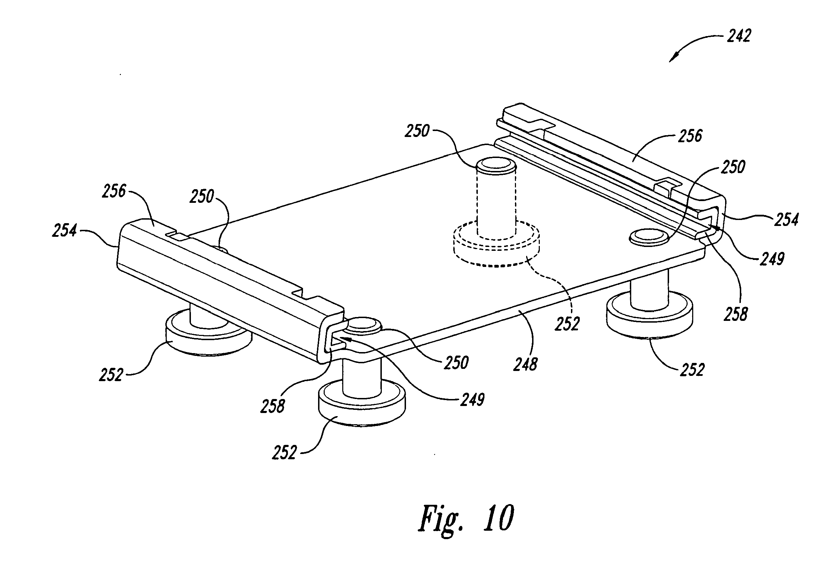

Figure 10 is a detailed perspective view of the guide member 242 of Figure 9. The guide member 242 can include a first wall 248 having a plurality of apertures 250 positioned to receive fasteners 252 for fastening the guide member 242 to the second electronic component 204 (Figure 8). The guide member 242 can also include second walls 254 extending from the first wall 248, and opposing third walls 256 extending toward each other. The third walls 256 can be generally parallel to the first wall 248. Accordingly, the first wall 248, the second walls 254, and the third walls 256 together can form two sliding channels 249 facing each other across the first wall 248. In the illustrated embodiment, the sliding channels 249 have a generally U-shaped cross section. In other embodiments, the sliding channels 249 can include other cross-section shapes including, for example, V shape, L shape, or other desired shapes. The guide member 242 can further include channel inserts 258 generally completely disposed in the sliding channels 249 to facilitate the sliding process. The channel inserts 258 can be constructed from a resilient material, e.g., a polymeric material, to cushion the relative sliding motion between the guide member 242 and the first and second sliding members 230, 240 (Figure 8).

Figures 11A-11B are bottom views of an embodiment of the electronic device 200 that incorporates an urging device to assist the user when sliding one component of the device 200 relative to another. For purposes of illustration, only the first component 202 is shown in Figures 11A-11B. Accordingly, in the illustrated example, the guide members 242 (which form a portion of the second electronic component 204, shown in Figure 8) are shown, but the rest of the second component is not. Figure 11A illustrates the guide members 242 positioned relative to the first and second sliding members 230, 240 when the first electronic component 202 and the second electronic component 204 (Figure 8) slidably offset from each other, e.g., generally similar to the open configuration shown in Figure 2B. Figure 11 B illustrates the guide members 242 positioned relative to the first and second sliding members 230, 240 when the first electronic component 202 and the second electronic component 204 (Figure 8) are in a closed position, e.g., generally similar to the closed configuration shown in Figure 2A.

The electronic device 200 can include an elastic device that assists in the process of sliding the second electronic component 204 (Figure 8) relative to the first electronic component 202. In the illustrated embodiment, the elastic device includes coil springs 350 attached to both the second sliding members 240 and the guide members 242 to facilitate the sliding process. In other embodiments, the elastic device can include other elastic components for assisting the sliding process.

In the illustrated embodiment, the coil springs 350 include off-centered springs having first ends 354 fixedly attached to the second sliding members 240 and second ends 356 attached to the guide members 242. The off-centered coil springs 350 can hold the guide members 242 relative to the sliding members 230, 240, e.g., in the position shown in Figure 11A. As the user slides the guide members 242 toward the position shown in Figure 11B, the guide members 242 compress the coil springs 350. When the second ends 356 of the coil springs 350 pass the first ends 354, the coil springs 350 extend in the opposite direction to drive the guide members 242 (and the second electronic component 204) toward the open position. Accordingly, the user only needs to initiate the sliding process and the coil springs 350 can complete the process.

Figures 12A-12B are bottom views of an embodiment of the electronic device 200 that incorporates another urging device to assist the user when sliding one component of the device 200 relative to another. In the illustrated example, the guide members 242 (which form a portion of the second electronic component) are shown, but other subcomponents of the second electronic component have been removed for clarity. Figure 12A illustrates the first and second sliding members 230, 240 and the guide members 242 when the first electronic component 202 and the second electronic component 204 (Figure 8) are in an open position. Figure 12B illustrates the first and second sliding members 230, 240 relative to the guide members 242 when the first electronic component 202 and the second electronic component 204 (Figure 8) are in a closed position.

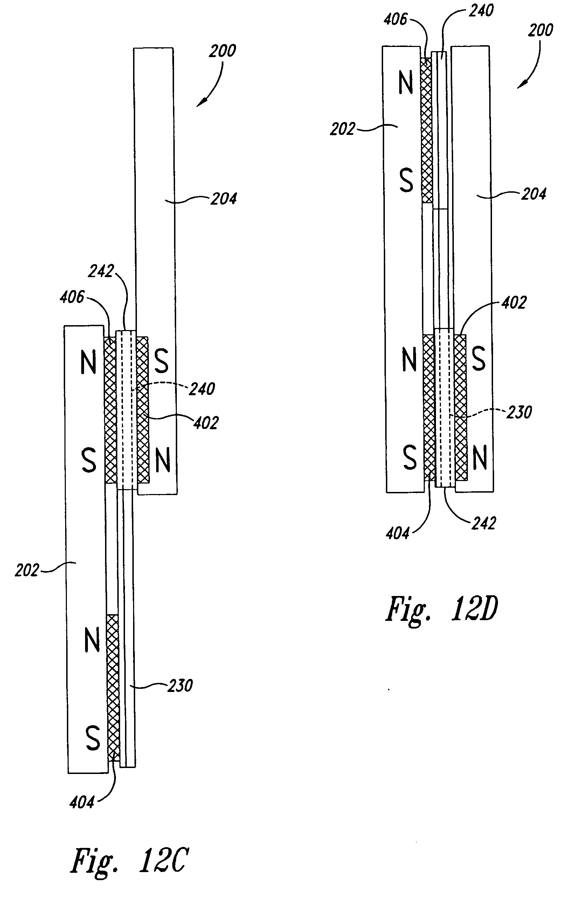

The electronic device 200 can include magnetic media that assist in the process of sliding the first electronic component 202 and the second electronic component 204 (Figure 8) relative to each other. For example, the electronic device 200 can include first, second, and third magnets 402, 404, and 406 attached to the guide members 242, the first sliding members 230, and the second sliding members 240, respectively. The poles of the first magnets 402 can be oriented generally opposite the poles of the second and third magnets 404, 406, as indicated by letters "N" and "S" in Figures 12A-12B. The operation of the magnets 402, 404, and 406 is described below in more detail with reference to Figures 12C-12D.

Figures 12C-12D are schematic cross-sectional views of the electronic device of Figures 12A-12B as it moves from an open position (Figure 12C) to a closed position (Figure 12D). The following steps are simply reversed to open the electronic device 200. Before the closing process, the first magnet 402 attracts the third magnet 406 because opposing poles of each magnets 402, 406 are generally aligned with each other. For example, as shown in Figure 12C, the south pole of the first magnet 402 is generally aligned with the north pole of the third magnet 406. The attractive force between the first and third magnets 402, 406 can maintain the first and second electronic components 202, 204 in the open position. As the user slides the first electronic component 202 relative to the second electronic component 204, the attractive force between the first and third magnets 402 and 406 weakens because the poles of these magnets move away from each other. When the south pole of the first magnet 402 passes over the south pole of the third magnet 406, the repulsive force between the first and third magnets 402, 406 urges the first magnet 402 to slide toward the second magnet 404. When the first magnet 402 approaches the second magnet 404, the opposite poles of the first magnet 402 and the second magnet 404 attract each other. The attractive force then urges the first electronic component 202 to slide relative to the second electronic component 204 into the closed position as shown in Figure 12D.

One feature of several embodiments of the electronic device 200 shown in Figures 11A-12D is that the urging device can maintain the relative position of the first and second electronic components 202, 204 (Figure 8) by applying a biasing force. For example, the off-centered coil springs 350 can urge the first and second electronic components 202, 204 (Figure 8) to be in the open configuration as shown in Figure 11A or in a closed configuration as shown in Figure 11B. Another feature of several embodiments of the electronic device 200 shown in Figures 11A-12D is that the urging device can assist the sliding process. For example, the magnets 402, 404, 406 can attract each other during the sliding process so that the user only needs to initiate the sliding process (e.g., by sliding the first electronic component 202 a small amount relative to the second electronic component 204). The magnets 402, 404, 406 can then complete the sliding process.

From the foregoing, it will be appreciated that specific embodiments of the invention have been described herein for purposes of illustration, but that various modifications may be made without deviating from the invention. For example, the elastic locks 138 can be omitted in certain embodiments. The electronic devices can include only one sliding member, one guide member, and one hinge instead of two of each. The electronic devices can also include additional components attached to the first and/or second electronic components, such as a reserve battery compartment, a radio receiver, and a transmitter. Certain aspects of the invention described in the context of particular embodiments may be combined or eliminated in other embodiments. For example, the electronic device 100 can also incorporate any of the urging devices as shown in Figures 11A-12C. Further, while advantages associated with certain embodiments of the invention have been described in the context of those embodiments, other embodiments may also exhibit such advantages, and not all embodiments need necessarily exhibit such advantages to fall within the scope of the invention. Accordingly, the invention is not limited except as by the appended claims.

## Claims

1. An electronic device (100, 200), comprising:
a first electronic component (102, 202) having a first sliding member (130, 230);
a second electronic component (104, 204) having a guide member (142, 242); and
a hinge (134, 234) coupling the first and second electronic components (102, 202, 104, 204), the hinge (134, 234) carrying a second sliding member (140, 240), wherein the first and second sliding members (130, 230, 140, 240) are positioned to engage the guide member (142, 242), with at least one of the first and second electronic components (102, 104, 202, 204) slidable relative to the other when the first and second sliding members (130, 140, 230, 240) are axially aligned with each other, **characterized in that** at least one of the first and second electronic components (102, 104, 202, 204) is pivotable relative to the other when the guide member (142, 242) is engaged with the second sliding member (140, 240) and disengaged from the first sliding member (130, 230).

2. The electronic device of claim 1 wherein the first sliding member (130, 230) is elongated along a first axis and the second sliding member (140, 240) is elongated along a second axis that is coaxial with the first axis.

3. The electronic device of claim 1 wherein the first and second sliding members (130, 140, 230, 240) form a slit (149) therebetween when the first and second sliding members (130, 140, 230, 240) are axially aligned with each other, and the guide member (142, 242) has a length greater than a length of the slit (149) to slide across the slit (149).

4. The electronic device of claim 1 wherein the first electronic component (102, 202) further includes a first channel (128) carrying the first sliding member (130, 230) and a second channel (132) receiving the hinge (134, 234) when the first and second sliding members (130, 140, 230, 240) are axially aligned with each other.

5. The electronic device of claim 1 wherein the guide member (142, 242) is housed in the second sliding member (140, 240) when one of the first and second electronic components (102, 104, 202, 204) is pivotable relative to the other.

6. The electronic device of claim 1 wherein the hinge (134, 234) further includes a notch (136) and the second electronic component (104, 204) further includes an elastic lock (138) positioned to engage the notch (136) when one of the first and second electronic components (102, 104, 202, 204) is pivotable relative to the other.

7. The electronic device of claim 1, further comprising an urging device operatively coupled between the guide member (142, 242) and the second sliding member (140, 240) to urge relative motion between the first and second electronic components (102, 104, 202, 204).

8. The electronic device of claim 7 wherein the urging device includes an elastic device having a first end coupled to the second sliding member (140, 240) and a second end coupled to the guide member (142, 242).

9. The electronic device of claim 7 wherein the urging device includes a first magnet (402) coupled to the first sliding member (130, 230), a second magnet (404) coupled to the second sliding member (140, 240), and a third magnet (406) coupled to the guide member (142, 242).

10. The electronic device of claim 1 wherein the first electronic component (102, 202) further includes an LCD display (106) and the second electronic component (104, 204) further includes a keyboard (126), and the keyboard (126) is one of QWERTY, QWERTZ, AZERTY, and DVORAK keyboard (126).

11. The electronic device of claim 1, wherein
the first electronic component (102, 202) has a first front surface, a rear surface (105) opposite to the front surface, a display (106) disposed on the front surface, and the first sliding member (130, 230) disposed on the rear surface (105);
the second electronic component (104, 204) has a second front surface, and a keyboard (126), wherein the keyboard (126) and the guide member (142, 242) are disposed on the second front surface; and
the hinge (134, 234) is coupled between the rear surface (105) of the first electronic component (102, 202) and the second front surface of the second electronic component (104, 204).

## Patentansprüche

1. Elektronische Vorrichtung (100, 200), umfassend:
ein erstes elektronisches Bauteil (102, 202) mit einem ersten Gleitelement (130, 230);
ein zweites elektronisches Bauteil (104, 204) mit einem Führungselement (142, 242); und
ein Gelenk (134, 234), das das erste und das zweite elektronische Bauteil (102, 202, 104, 204) verbindet, wobei das Gelenk (134, 234) ein zweites Gleitelement (140, 240) trägt, wobei das erste und zweite Gleitelement (130, 230, 140, 240) angeordnet sind, um mit dem Führungselement (142, 242) in Eingriff zu gelangen, wobei zumindest eines der ersten und zweiten elektronischen Bauteile (102, 104, 202, 204) in Bezug auf das andere gleitfähig ist, wenn das erste und zweite Gleitelement (130, 140, 230, 240) axial zueinander ausgerichtet sind, **dadurch gekennzeichnet, dass** zumindest eines der ersten und zweiten elektronischen Bauteile (102, 104, 202, 204) in Bezug auf das andere schwenkbar ist, wenn das Führungselement (142, 242) mit dem zweiten Gleitelement (140, 240) in Eingriff und mit dem ersten Gleitelement (130, 230) außer Eingriff ist.

2. Elektronische Vorrichtung nach Anspruch 1, wobei sich das erste Gleitelement (130, 230) entlang einer ersten Achse erstreckt und das zweite Gleitelement (140, 240) sich entlang einer zweiten Achse, die koaxial zur ersten Achse ist, erstreckt.

3. Elektronische Vorrichtung nach Anspruch 1, wobei das erste und zweite Gleitelement (130, 140, 230, 240) einen Schlitz (149) zwischen sich bilden, wenn das erste und zweite Gleitelement (130, 140, 230, 240) axial zueinander ausgerichtet sind, und das Führungselement (142, 242) eine Länge aufweist, die größer als eine Länge des Schlitzes (149) ist, um über den Schlitz (149) zu gleiten.

4. Elektronische Vorrichtung nach Anspruch 1, wobei das erste elektronische Bauteil (102, 202) ferner einen ersten Kanal (128), der das erste Gleitelement (130, 230) trägt, und einen zweiten Kanal (132), der das Gelenk (134, 234) aufnimmt, wenn das erste und zweite Gleitelement (130, 140, 230, 240) axial zueinander ausgerichtet sind, umfasst.

5. Elektronische Vorrichtung nach Anspruch 1, wobei das Führungselement (142, 242) in dem zweiten Gleitelement (140, 240) aufgenommen ist, wenn das erste oder zweite elektronische Bauteil (102, 104, 202, 204) in Bezug auf das andere schwenkbar ist.

6. Elektronische Vorrichtung nach Anspruch 1, wobei das Gelenk (134, 234) ferner eine Aussparung (136) und das zweite elektronische Bauteil (104, 204) ferner eine elastische Verriegelung (138) umfasst, die so angeordnet ist, dass sie in die Aussparung (136) eingreift, wenn das erste oder zweite elektronische Bauteil (102, 104, 202, 204) in Bezug auf das andere schwenkbar ist.

7. Elektronische Vorrichtung nach Anspruch 1, ferner umfassend eine Drängvorrichtung, die zwischen dem Führungselement (142, 242) und dem zweiten Gleitelement (140, 240) angeordnet ist, um eine relative Bewegung zwischen dem ersten und zweiten Bauteil (102, 103, 202, 204) zu verursachen.

8. Elektronische Vorrichtung nach Anspruch 7, wobei die Drängvorrichtung eine elastische Vorrichtung mit einem ersten Ende, das mit dem zweiten Gleitelement (140, 240) verbunden ist, und einem zweiten Ende, das mit dem Führungselement (142, 242) verbunden ist, umfasst.

9. Elektronische Vorrichtung nach Anspruch 7, wobei die Drängvorrichtung einen mit dem ersten Gleitelement (130, 230) verbundenen ersten Magneten (402), einen mit dem zweiten Gleitelement (140, 240) verbundenen zweiten Magneten (404) und einen mit dem Führungselement (142, 242) verbundenen dritten Magneten (406) umfasst.

10. Elektronische Vorrichtung nach Anspruch 1, wobei das erste elektronische Bauteil (102, 202) ferner eine LCD-Anzeige (106) umfasst und das zweite elektronische Bauteil (104, 204) ferner eine Tastatur (126) umfasst, und die Tastatur (126) eine QWERTY-, QWERTZ-, AZERTY- oder DVORAK-Tastatur (126) ist.

11. Elektronische Vorrichtung nach Anspruch 1, wobei
das erste elektronische Bauteil (102, 202) eine erste vordere Oberfläche, eine hintere Oberfläche (105) gegenüber der vorderen Oberfläche, eine auf der vorderen Oberfläche angeordnete Anzeige (106) aufweist, und auf der hinteren Oberfläche (105) das erste Gleitelement (130, 230) angeordnet ist;
das zweite elektronische Bauteil (104, 204) eine zweite vordere Oberfläche und eine Tastatur (126) aufweist, wobei die Tastatur (126) und das Führungselement (142, 242) auf der zweiten vorderen Oberfläche angeordnet sind; und
das Gelenk (134, 234) die hintere Oberfläche (105) des ersten elektronischen Bauteils (102, 202) und die zweite vordere Oberfläche des zweiten elektronischen Bauteils (104, 204) verbindet.

## Revendications

1. Dispositif électronique (100, 200), comprenant :
un premier composant électronique (102, 202) ayant un premier élément coulissant (130, 230) ;
un second composant électronique (104, 204) ayant un élément formant guide (142, 242) ; et
une charnière (134, 234) raccordant le premier et le second composants électroniques (102, 202, 104, 204), la charnière (134, 234) supportant un second élément coulissant (140, 240), le premier et le second éléments coulissants (130, 230, 140, 240) étant positionnés pour être en prise avec l'élément formant guide (142, 242), au moins un du premier et du second composants électroniques (102, 202, 104, 204) étant coulissant l'un par rapport à l'autre quand le premier et le second éléments coulissants (130, 140, 230, 240) sont alignés dans le sens axial l'un avec l'autre, **caractérisé en ce qu'**au moins un du premier et du second composants électroniques (102, 104, 202, 204) pivote par rapport à l'autre quand l'élément formant guide (142, 242) est en prise avec le second élément coulissant (140, 240) et hors de prise avec le premier élément coulissant (130, 230).

2. Dispositif électronique selon la revendication 1 dans lequel le premier élément coulissant (130, 230) est allongé le long d'un premier axe et le second élément coulissant (140, 240) est allongé le long d'un second axe qui est coaxial avec le premier axe.

3. Dispositif électronique selon la revendication 1 dans lequel le premier et le second éléments coulissants (130, 140, 230, 240) forment une fente (149) entre eux quand le premier et le second éléments coulissants (130, 140, 230, 240) sont alignés dans le sens axial l'un avec l'autre, et l'élément formant guide (142, 242) a une longueur supérieure à la longueur de la fente (149) pour coulisser à travers la fente (149).

4. Dispositif électronique selon la revendication 1 dans lequel le premier composant électronique (102, 202) comprend en outre un premier canal (128) supportant le premier élément coulissant (130, 230) et un second canal (132) recevant la charnière (134, 234) quand le premier et le second éléments coulissants (130, 140, 230, 240) sont alignés dans le sens axial l'un avec l'autre.

5. Dispositif électronique selon la revendication 1, dans lequel l'élément formant guide (142, 242) est logé dans le second élément coulissant (140, 240) quand l'un du premier et du second composants électroniques (102, 104, 202, 204) pivote l'un par rapport à l'autre.

6. Dispositif électronique selon la revendication 1, dans lequel la charnière (134, 234) comprend en outre une encoche (136) et le second composant électronique (104, 204) comprend en outre un verrou élastique (138) positionné pour être en prise avec l'encoche (136) quand l'un du premier et du second composants électroniques (102, 104, 202, 204) pivote par rapport à l'autre.

7. Dispositif électronique selon la revendication 1, comprenant en outre un dispositif de poussée raccordé fonctionnellement entre l'élément formant guide (142, 242) et le second élément coulissant (140, 240) pour solliciter un déplacement relatif entre le premier et le second composants électroniques (102, 104, 202, 204).

8. Dispositif électronique selon la revendication 7, dans lequel le dispositif de poussée comprend un dispositif élastique ayant une première extrémité raccordée au second élément coulissant (140, 240) et une seconde extrémité raccordée à l'élément formant guide (142, 242).

9. Dispositif électronique selon la revendication 7, dans lequel le dispositif de poussée comprend un premier aimant (402) raccordé au premier élément coulissant (130, 230), un second aimant (404) raccordé au second élément coulissant (140, 240), et un troisième aimant (406) raccordé à l'élément formant guide (142, 242).

10. Dispositif électronique selon la revendication 1, dans lequel le premier composant électronique (102, 202) comprend en outre un écran à cristaux liquides (106) et le second composant électronique (104, 204) comprend en outre un clavier (126), et le clavier (126) est l'un des claviers (126) QWERTY, QWERTZ, AZERTY et DVORAK.

11. Dispositif électronique selon la revendication 1, dans lequel
le premier composant électronique (102, 202) a une première surface avant, une surface arrière (105) opposée à la surface avant, un écran (106) disposé sur la surface avant, et le premier élément coulissant (130, 230) disposé sur la surface arrière (105) ;
le second composant électronique (104, 204) a une seconde surface avant, et un clavier (126), le clavier (126) et l'élément formant guide (142, 242) étant disposés sur la seconde surface avant ; et
la charnière (134, 234) est raccordée entre la surface arrière (105) du premier composant électronique (102, 202) et la seconde surface avant du second composant électronique (104, 204).
